# FASCICULE DE BREVET EUROPEEN

(11) **EP 0 433 105 B1**
(45) Date de publication et mention de la délivrance du brevet: **22.03.1995**
(21) Numéro de dépôt: 90403133.3
(22) Date de dépôt: 06.11.1990
(51) Int. Cl.: C08F 4/02

(54) **Support de catalyseur pour la polymérisation des oléfines, procédé de fabrication du support et catalyseur obtenu à partir de ce support**
Katalysatorträger für Olefinpolymerisation, Verfahren zu seiner Herstellung und damit erhaltener Katalysator
Catalyst support for olefinic polymerization, process for preparing the same and catalyst obtained therefrom

(30) Priorité: 16.11.1989 FR 8915028
(43) Date de publication de la demande: 19.06.1991
(73) Titulaire: ELF ATOCHEM S.A., 92800 Puteaux (FR)
(72) Inventeur: Duranel, Laurent, F-64370 Arthez de Béarn (FR); Malinge, Jean, F-64300 Orthez (FR); Bousque, Marie-Laure, F-64000 Pau (FR)
(74) Mandataire: Foiret, Claude Serge

(56) Documents cités:
- EP-A- 0 018 737
- BE-A- 839 131
- CHEMICAL ABSTRACTS, vol. 105, no. 18, 03 novembre 1986 Columbus, Ohio, USA ref. no. 153696T

## Description

La présente invention concerne un support de catalyseur constitué essentiellement d'un complexe de chlorure de magnésium et de n-butanol (n-BuOH). Ce complexe formé de particules de fort volume poreux possède une faible surface spécifique. Il est préparé par précipitation de MgCl₂ en solution dans le n-butanol, à une température inférieure au point de fusion du complexe, à partir d'une émulsion de ladite solution.

A partir du support peut être obtenu un catalyseur de polymérisation des oléf ines par dépôt dans les conditions connues d'un composé de métal de transition ainsi que des autres éventuels composants habituels à ce type de catalyseur.

Selon le GB-A 2 029 840 il est connu de mélanger un chlorure de magnésium, un alcool ou un phénol et une huile minérale et de former une émulsion de l'ensemble à une température d'environ 120°C afin de maintenir à l'état fondu le complexe chlorure de magnésium-alcool ou phénol. Après une trempe de l'émulsion chaude dans un non solvant très froid du complexe on récupère un produit de surface spécifique de 300 à 500 m²/g dont la porosité des particules est comprise entre 0,3 et 0,4 cm³/g.

Il est également connu du US-A 4 499 194 de fabriquer un support constitué d'un complexe de chlorure de magnésium et d'alcool ou de phénol. Selon ce document un chlorure de magnésium est mis à réagir avec un alcool ou un phénol dans un solvant organique inerte de façon à former un complexe, l'ensemble étant ensuite maintenu en suspension dans un solvant organique inerte à une température de 85 à 170°C de façon à maintenir le complexe à l'état fondu. De cette suspension chaude sont précipitées par un composé organoaluminique ou un halogènure de silicium des particules possédant une surface spécifique de 200 à 700 m²/g et une porosité comprise entre 0,2 et 0,7 cm³/g.

Le document Chemical Abstracts, vol 105, ref. no. 1536 96 T décrit Un procédé voisin du US 4,499,194, la fabrication d'un support à partir d'une suspension d'un complexe de chlorure de magnésium avec un alcool dans un diluant organique étant réalisée entre 85 et 90°C.

Selon le procédé de la présente invention il est possible d'obtenir un support sous forme de particules solides constitué essentiellement d'un complexe de formule MgCl₂, x(n-BuOH) dans laquelle 0,1 ≦ x ≦ 2 et dont la surface spécifique est de 1 à 20 m²/g et dont la porosité des particules est de 1 à 2 cm³/g. Le support est formé de particules solides, de tailles moyennes de 10 à 100 »m, dont la largeur de distribution granulométrique, définie par le rapport D₉₀/D₁₀ est inférieure ou égale à 7, D₉₀ et D₁₀ étant respectivement les diamètres en-dessous desquels on trouve 90 % et 10 % en poids des particules.

De façon habituelle dans le support obtenu le rapport massique Cl/Mg est de 2,65 à 2,96 et le rapport massique n-BuOH/Mg est de 0,4 à 6.

Le procédé de fabrication du support à partir du MgCl₂ et du n-butanol est caractérisé en ce qu'une solution de MgCl₂ dans un excès de n-butanol mise en émulsion dans un milieu émulsionnant est traitée par un agent précipitant de formule SiClₓR₄₋ₓ dans laquelle 1 ≦ x ≦ 4. Le complexe formé, MgCl₂, x(n-BuOH) dans lequel 0,1 ≦ x ≦ 2, se trouve dans l'émulsion et lors de la précipitation à une température d'au plus 50°C.

Afin de faciliter la mise en solution du MgCl₂ dans le n-butanol il est recommandé de disperser préalablement le MgCl₂ dans un liquide organique non solvant du MgCl₂ et chimiquement inerte vis à vis du MgCl₂ et du n-butanol, et de mélanger le n-butanol à la dispersion. Le liquide dispersant du MgCl2 doit posséder un point d'ébullition de préférence inférieur ou égal à 100°C ; il est habituellement choisi parmi les hydrocarbures légers tels que l'hexane.

Afin de mettre en solution le MgCl₂ dans le n-butanol le rapport molaire n-butanol sur MgCl₂ est généralement d'au moins 9 pour faciliter la mise en solution du MgCl₂ dans le n-butanol et/ou la manipulation de cette solution à une température inférieure à 50°C. Bien que le rapport molaire supérieur ne soit pas limitatif, il est recommandé, par économie et en vue de limiter les volumes de produits à manipuler, de ne pas dépasser un rapport molaire n-butanol sur MgCl₂ de 15. Une solution limpide et parfaitement stable de MgCl₂ dans le n-butanol à une température ne dépassant pas 50°C est obtenue pour une concentration molaire de 10 n-butanol pour 1 MgCl₂, aussi les meilleures conditions de mise en solution du MgCl₂ dans le n-butanol sont-elles d'utiliser, pour la mise en solution du MgCl₂, un rapport molaire n-butanol sur MgCl₂ de 9,5 à 10,5.

Le MgCl₂ est mis en solution, de préférence sous agitation, dans le n-butanol à une température de 20 à 110°C et de préférence de 50 à 100°C. Lorsque le MgCl₂ comme déjà signalé est préalablement dispersé dans un liquide dispersant, le mélange, après ajout du n-butanol, est maintenu pendant un temps suffisant et une température suffisante comprise entre 20 et 110°C et de préférence de 50 à 100°C afin d'une part de faciliter la mise en solution du MgCl₂ dans le n-butanol et d'autre part d'éliminer le liquide utilisé pour la dispersion. Après ce traitement la solution obtenue, une fois refroidie, reste limpide et stable à une température d'au plus 50°C.

La solution de MgCl₂ dans le n-butanol, après élimination de l'éventuel liquide dispersant, est mise en émulsion dans un milieu émulsionnant qui est un liquide organique non solvant et inerte vis à vis de la solution, en présence d'un tensio-actif non ionique à une température pouvant varier de la température ambiante à 50°C. Le liquide organique émulsionnant est de préférence choisi parmi les hydrocarbures lourds, tels que les huiles paraffiniques, de viscosité à 20°C comprise entre 0,1 et 1 Pa.s. Dans l'émulsion, le rapport volumique du milieu émulsionnant sur la phase butanolique représentée par la solution de MgCl₂ dans le n-butanol, est habituellement de 1 à 5 et mieux de 2 à 3.

Le tensio-actif non ionique a pour fonction bien connue de faciliter le maintien sous forme dispersée dans le milieu émulsionnant des goutelettes, dans le cas précis de solution butanolique de MgCl₂, formée par émulsion. Ce tensio-actif est de préférence choisi parmi ceux de balance hydrophyle-lipophyle (HLB) compris entre 0 et 9 et mieux entre 1 et 4. Cette HLB, définie par GRIFFIN en 1940 est caractéristique de chaque tensio-actif. Elle fixe une échelle arbitraire de 0 à 20, admettant que les produits lipophiles ont une HLB de 0 à 9 et que les composés hydrophiles ont une HLB de 11 à 20. Ces tensio-actifs peuvent par exemple être des esters d'acide gras de sorbitan ou de glycérine comme le trioléate de sorbitan ou les mono et dioléate de glycérine, ou encore des esters d'acide gras polyoxyéthylénés. La quantité de tensio-actif ajouté est de l'ordre de 1 à 5 % en poids, et mieux de 2 à 3 %, de l'ensemble milieu dispersant et solution butanolique de MgCl₂.

L'agitation doit, comme le sait l'homme de métier, être suffisante pour maintenir la phase alcoolique sous forme de goutelettes dans le milieu émulsionnant. Cela étant respecté, les conditions d'agitation ne semblent pas des plus critiques du fait, en particulier, d'une meilleure stabilité de l'émulsion aux températures du procédé qu'aux températures supérieures.

A cette émulsion est ajouté l'agent précipitant qui est un dérivé chloré du silicium de formule SiClₓR₄₋ₓ dans laquelle 1 ≦ x ≦ 4 et R est un radical hydrocarboné saturé contenant de 1 à 4 atomes de carbone. Il est de préférence ajouté sous agitation à l'émulsion et suffisamment lentement pour contrôler la formation de HCl et maitriser la réaction. Bien qu'il puisse être ajouté pur à l'émulsion, le dérivé chloré de silicium est habituellement ajouté dilué dans un solvant inerte tel qu'un hydrocarbure. La température de l'émulsion est bien entendu maintenue dans l'intervalle de l'ambiance à 50°C pendant la précipitation du complexe MgCl₂,x(n-BuOH), intervalle qui facilite le contrôle de la morphologie et des caractéristiques physiques du support final.

Le support précipité peut être de façon classique récupéré après filtration, lavage par un liquide organique inerte, tel qu'un hydrocarbure léger, et séchage.

Il peut être recommandé de faire subir au support un second traitement par le dérivé chloré du silicium précédent. Dans ce cas, le support, tel que précipité précédemment et isolé après éventuellement lavage et même séchage, est remis en suspension dans un liquide organique non solvant tel qu'un hydrocarbure et traité une seconde fois par le dérivé chloré du silicium dans des conditions analogues à celles décrites pour le premier traitement.

Que le traitement de la solution de MgCl₂ dans le n-butanol par le composé chloré du silicium soit effectuée en une seule ou deux fois la quantité totale de composé chloré de silicium mise en oeuvre est généralement elle que le rapport molaire Cl du composé chloré du silicium/n-butanol est de 1 à 8 et mieux de 2 à 4.

Une composante catalytique peut être obtenue par combinaison du support selon l'invention avec un compsoé de métal de transition. C'est ainsi par exemple qu'une telle composante peut être obtenue par imprégnation du support par un composé du titane de préférence halogéné. Cette composante catalytique associée à un cocatalyseur choisi parmi les composés organométalliques des métaux I à III du tableau périodique et plus particulièrement les composés d'aluminium, sert de catalyseur de polymérisation ou copolymérisation des oléfines linéaires ou ramifiées comme l'éthylène, le propylène, le butène-1, l'hexène-1, l'octène-1, le 4-méthylpentène-1, le butadiène-1-3.

Au moins un donneur d'électrons peut être ajouté, lors de sa fabrication à la composante catalytique et/ou au cocatalyseur. Le donneur d'électrons peut être par exemple choisi parmi les acides de Lewis, les esters des acides oxygénés, les cétones, les aldehydes, les éthers, les amides et les composés du phosphore tels que les phosphines et les phosphoramides, les préférés étant les esters alcoylés d'acides aromatiques ou les mono ou diethers d'alcoyle.

Le catalyseur obtenu à partir d'une composante fabriquée à partir du support convient à tous les types de polymérisation des oléfines : en haute et basse pression, en suspension ou en phase gazeuse.

Les exemples suivants illustrent l'invention. Les granulométries, diamètre moyen D₅₀ et largeur de distribution granulométrique définie par D₉₀/D₁₀ sont effectuées au moyen d'un granulomètre à laser MALVERN 1600. La surface spécifique est mesurée par l'adsorption physique isotherme d'azote à la température de l'azote liquide, méthode BET, sur un appareil QUANTASORB de la Société QUANTACHROME. Le volume poreux est déterminé par adsorption de mercure sous pression avec un porosimètre ERBASCIENCE 1500.

### EXEMPLE 1

Dans un réacteur de 2 l, sont introduits successivement sous atmophère inerte et sous agitation 450 ml d'hexane sec puis 150 g de MgCl₂ anhydre. A cette suspension on ajoute 1440 ml de n-butanol anhydre. L'hexane est distillé par chauffage à 60°C pendant 1 heure sous balayage d'azote. Lors de cette étape le MgCl₂ se dissout. Après retour à température ambiante, la solution homogène possède les caractéristiques suivantes : %Mg = 3,02, %Cl = 8,9, %n-BuOH = 88, (% en poids), d_{20°C} = 0,95 g/cm³.

Dans un réacteur de 2 l sous atmosphère inerte, muni d'une agitation mécanique, sont introduits successivement 500 ml d'une huile paraffinique de viscosité à 20°C égale à 0,2 Pa.s, 16 g de trioléate de sorbitan, et 200 ml de solution MgCl₂, 10 n-BuOH préparée ci-dessus. Après agitation de 30 minutes à 1000 tours/mn, on obtient une émulsion blanchâtre stable sous agitation.

Dans cette solution à 35°C, on ajoute lentement en 45 mn, 225 ml de solution de SiCl₄ 5M dans l'hexane. Le mélange est ensuite maintenu à 50°C pendant une heure. Après refroidissement, le solide précipité est filtré et lavé trois fois par 300 ml d'hexane sec, puis séché sous azote.

Le support isolé est granulaire et possède les caractéristiques suivantes : Cl/Mg = 2,7, n-BuOH/Mg = 1,55, surfaces = 2 m²/g, volume poreux = 1,06 cm³/g, diamètre moyen, D50 = 43 »m, D90/D10 = 5,2.

### EXEMPLE 2

A une même quantité d'émulsion, à une température de 35°C, préparée selon l'exemple 1 sont ajoutés, en 40 mn, 130 ml de solution SiCl₄ 5M dans l'hexane. Le mélange est ensuite maintenu à 50°C pendant 1 heure. Le solide précipité est filtré puis remis en suspension dans l'hexane. On ajoute alors 130 ml de solution SiCl₄ 5M et l'on maintient à nouveau le mélange à 50°C pendant 1 heure sous faible agitation. Le solide est isolé comme dans l'exemple 1.

Le support possède les caractérisques suivantes : Cl/Mg = 2,93, n-BuOH = 2,1, surface = 16,7 m²/g, volume poreux = 1,79 cm³/g. D₅₀ = 91 »m, D₉₀/D₁₀ = 5,7.

### EXEMPLE 3

Dans un réacteur sous azote, on place 40 ml d'heptane sec et 7,5 g de support de l'exemple 1, puis on ajoute sous agitation 28 ml de TiCl₄. Le mélange est porté à 90°C pendant 2 heures, filtré et lavé par de l'hexane à 50°C. La composante catalytique obtenue contient 6,1 % en poids de Ti.

Dans un réacteur de 2,5 l, on introduit dans l'ordre, à température ambiante, sous atmopshère inerte, 1,5 l d'hexane, 5 mH de triisobutylaluminium et 13,5 mg de la composante catalytique précédente. On ajoute l'hydrogène jusqu'à une pression partielle de 4,2 bars et on complète avec de l'éthylène, en ajustant la pression pour atteindre 11 bars absolus de pression totale après chauffage à 80°C. Cette pression totale est maintenue constante pendant 3 heures par addition d'éthylène. Au bout de 3 heures, on arrète l'injection d'éthylène et on refroidit à température ambiante ; le catalyseur est désactivé par addition d'une solution de méthanol acide à 10 %. On isole après filtration et séchage 550 g de polyéthylène d'indice de fluidité (Melt Index) sous 2 kg à 190°C en 10 minutes MI₂ 0,98, soit une productivité de 40700 g PE/g catalyseur.

### EXEMPLE 4

Dans un réacteur sous azote on ajoute sous agitation à 56 g de support de l'Exemple 2, 200 ml de TiCl₄ dans 1000 ml d'heptane. Le mélange est porté à 90°C pendant 2 heures, filtré et lavé par de l'hexane à 50°C. La composante catalytique obtenue contient 8,4 % en poids de Ti.

On engage en polymérisation de l'éthylène 5 mg de la conposante catalytique, dans les mêmes conditions que dans l'Exemple 3. La quantité de polymère produite est de 610 g de polyéthylène de MI₂ = 0,7, soit une productivité de 120000 g PE/g catalyseur.

### EXAMPLE 5

Dans un réacteur sous azote, an place 5 g du support de l'Exemple 2 dans de l'heptane sec. On ajoute 2,5mM de triéthylaluminium, et l'on porte le mélange à 50°C pendant une heure. Après lavage à l'heptane, le solide ainsi obtenu est repris par 50 ml d'une solution dans l'heptane de dioctylphtalate à 0,3 mole par litre pendant deux heures à 90°C. Après filtration et lavage à l'heptane, le solide est traité deux fois par une solution à 1 M/l de Ticl₄ dans le 1-2 dichloroéthane pendant 2 heures à 80°C. Après lavage et séchage, on obtient une composante catalytique solide contenant 4,7 % en poids de titane.

Dans un réacteur autoclave en acier inoxydable, muni d'une agitation magnétique et d'un chauffage par double enveloppe, on introduit successivement, 1,5 litres de propylène liquide, 4,5 mM de triéthylaluminium et 0,45 mM de phényltriéthoxysilane, et 15 mg de composante catalytique.

La température est portée à 70°C pendant 1 heure. On récupère 169,5 g de polypropylène dont 7,9 g de polymère soluble dans l'heptane bouillant. L'activité catalytique est de 240000 g polymère/g Tih⁻¹. Le polymère présente une bonne coulabilité et une distribution granulométrique étroite. Le polymère présente un indice de fluidité mesuré à 230°C sous 2,16 kg, de 3 g en 10 minutes.

## Revendications

1. Support de catalyseur sous forme de particules solides constitué essentiellement d'un complexe de MgCl₂ et d'alcool caractérisé en ce que le complexe, de formule MgCl₂, x(n-BuOH) dans laquelle 0,1 ≦ x ≦ 2, possède une surface spécifique de 1 à 20 m²/g, la porosité des particules étant de 1 à 2 cm³/g.

2. Support selon la revendication 1 caractérisé en ce que la largeur de distribution granulométrique définie par le rapport D₉₀/D₁₀ soit telle que D₉₀/D₁₀ ≦ 7.

3. Procédé de fabrication du support de catalyseur des revendications 1 ou 2 consistant à mettre en contact du MgCl₂ et du n-butanol caractérisé en ce qu'une solution de MgCl₂ dans un excès de n-butanol mise en émulsion dans un milieu émulsionnant est traitée par un agent précipitant de formule SiClₓR₄₋ₓ dans laquelle 1 ≦ x 4 et R étant un radical hydrocarboné saturé contenant de 1 à 4 atomes de carbone, le complexe formé se trouvant dans l'émulsion et lors de la précipitation à une température d'au plus 50°C.

4. Procédé selon la revendication 3 caractérisé en ce que dans la solution le rapport molaire n-butanol/MgCl₂ est d'au moins 9.

5. Procédé selon l'une des revendications 3 ou 4 caractérisé en ce que le MgCl₂ est, préalablement à sa mise en solution dans le n-butanol, dispersé dans un liquide organique non solvant du MgCl₂ et chimiquement inerte vis à vis du MgCl₂ et du n-butanol.

6. Procédé selon la revendication 5 caractérisé en ce que le liquide organique dispersant possède un point d'ébullition inférieur ou égal à 100°C.

7. Procédé selon l'une des revendications 5 ou 6 caractérisé en ce que le liquide organique dispersant est un hydrocarbure.

8. Procédé selon l'une des revendications 5 à 7 caractérisé en ce que le liquide organique dispersant est éliminé de la solution de MgCl₂ dans le n-butanol préalablement à la mise en émulsion de ladite solution.

9. Procédé selon l'une des revendications 3 à 8 caractérisé en ce que le milieu émulsionnant est un hydrocarbure de viscosité à 20°C compris entre 0,1 et 1 Pa.s.

10. Procédé selon l'une des revendications 3 à 9 caractérisé en ce que le rapport volumique du milieu émulsionnant sur la solution de MgCl₂ dans le n-butanol est de 1 à 5.

11. Procédé selon l'une des revendications 3 à 10 caractérisé en ce que la quantité totale de composé chloré de silicium mise en oeuvre est telle que le rapport molaire Cl du composé chloré de silicium sur n-butanol est de 1 à 8.

12. Composante catalytique utilisable dans la polymérisation ou copolymérisation des oléfines obtenue par combinaison d'un métal de transition et éventuellement d'un donneur d'électrons avec le support des revendications 1 à 3 ou obtenue selon le procédé des revendications 4 à 11.

## Claims

1. Catalyst support in the form of solid particles consisting essentially of a complex of MgCl₂ and alcohol, characterized in that the complex, of formula MgCl₂·x(n-BuOH) in which 0.1 ≦ x ≦ 2, has a specific surface area of 1 to 20 m²/g, the porosity of the particles being from 1 to 2 cm³/g.

2. Support according to Claim 1, characterized in that the breadth of the particle size distribution defined by the ratio D₉₀/D₁₀ is such that D₉₀/D₁₀ ≦ 7.

3. Process for the manufacture of the catalyst support of Claims 1 or 2 which consists in bringing together MgCl₂ and n-butanol, characterized in that a solution of MgCl₂ in an excess of n-butanol placed in emulsion in an emulsifying medium is treated with a precipitating agent of formula SiClₓR₄₋ₓ in which 1 ≦ x ≦ 4 and R is a saturated hydrocarbon radical containing from 1 to 4 carbon atoms, the complex formed being found in the emulsion and during the precipitation at a temperature of not more than 50°C.

4. Process according to Claim 3, characterized in that the n-butanol/MgCl₂ molar ratio in the solution is at least 9.

5. Process according to either of Claims 3 and 4, characterized in that, prior to its dissolution in the n-butanol, the MgCl₂ is dispersed in an organic liquid which is not a solvent for MgCl₂ and which is chemically inert with respect to MgCl₂ and to n-butanol.

6. Process according to Claim 5, characterized in that the dispersing organic liquid has a boiling point lower than or equal to 100°C.

7. Process according to either of Claims 5 and 6, characterized in that the dispersing organic liquid is a hydrocarbon.

8. Process according to one of Claims 5 to 7, characterized in that the dispersing organic liquid is removed from the solution of MgCl₂ in n-butanol prior to the emulsification of the said solution.

9. Process according to one of Claims 3 to 8, characterized in that the emulsifying medium is a hydrocarbon of viscosity at 20°C between 0.1 and 1 Pa.s.

10. Process according to one of Claims 3 to 9, characterized in that the ratio by volume of the emulsifying medium to the solution of MgCl₂ in n-butanol is from 1 to 5.

11. Process according to one of Claims 3 to 10, characterized in that the total amount of chloro silicon compound used is such that the Cl of the chloro silicon compound to n-butanol molar ratio is from 1 to 8.

12. Catalytic component which may be used in the polymerization or copolymerization of the olefins obtained by combination of a transition metal, and where appropriate an electron donor, with the support of Claims 1 to 3 or obtained according to the process of Claims 4 to 11.

## Patentansprüche

1. Katalysatorträger in Form fester Partikel, der im wesentlichen aus einem Komplex von MgCl₂ und Alkohol gebildet wird, dadurch gekennzeichnet, daß der Komplex der Formel MgCl₂ · x(n-BuOH) mit 0,1 ≦ x ≦ 2 eine spezifische Oberfläche zwischen 1 und 20 m²/g und eine Teilchenporosität zwischen 1 und 2 cm³/g besitzt.

2. Träger nach Anspruch 1, dadurch gekennzeichnet, daß die Breite der Korngrößenverteilung, die durch das D₉₀/D₁₀-Verhältnis definiert ist, einem Verhältnis von D₉₀/D₁₀ ≦ 7 entspricht.

3. Verfahren zur Herstellung eines Katalysatorträgers aus Anspruch 1 oder 2, bestehend aus der Kontaktierung von MgCl₂ mit n-Butanol, dadurch gekennzeichnet, daß eine in einem emulgierenden Milieu emulgierte MgCl₂-Lösung in einem n-Butanol-Überschuß mit einem Fällungsmittel der Formel SiClₓR₄₋ₓ behandelt wird, in der 1 ≦ x ≦ 4 und R ein gesättigter Kohlenwasserstoffrest mit 1 bis 4 Kohlenstoffatomen ist; wobei der gebildete Komplex in der Emulsion vorliegt und während der Fällung eine Temperatur von höchstens 50 °C hat.

4. Verfahren nach Anspruch 3, dadurch gekennzeichnet, daß in der Lösung das n-Butanol/MgCl₂-Molverhältnis mindestens 9 beträgt.

5. Verfahren nach Anspruch 3 oder 4, dadurch gekennzeichnet, daß das MgCl₂, bevor es in n-Butanol gelöst wird, in einer organischen Flüssigkeit dispergiert wird, die chemisch inert gegenüber MgCl₂ und n-Butanol ist und in der sich das MgCl₂ nicht löst.

6. Verfahren nach Anspruch 5, dadurch gekennzeichnet, daß die dispergierende organische Flüssigkeit einen Siedepunkt von kleiner oder gleich 100 °C hat.

7. Verfahren nach Anspruch 5 oder 6, dadurch gekennzeichnet, daß die dispergierende organische Flüssigkeit ein Kohlenwasserstoff ist.

8. Verfahren nach einem der Ansprüche 5 bis 7, dadurch gekennzeichnet, daß die dispergierende organische Flüssigkeit aus der Lösung von MgCl₂ in n-Butanol entfernt wird, bevor die Lösung emulgiert wird.

9. Verfahren nach einem der Ansprüche 3 bis 8, dadurch gekennzeichnet, daß das emulgierende Milieu ein Kohlenwasserstoff mit einer Viskosität zwischen 0,1 und 1 Pa · s bei 20 °C ist.

10. Verfahren nach einem der Ansprüche 3 bis 9, dadurch gekennzeichnet, daß das Volumenverhältnis des emulgierenden Milieus zur Lösung von MgCl₂ in n-Butanol zwischen 1 und 5 liegt.

11. Verfahren nach einem der Ansprüche 3 bis 10, dadurch gekennzeichnet, daß die Gesamtmenge der eingebrachten chlorierten Siliciumverbindung einem Molverhältnis von Cl der chlorierten Siliciumverbindung zum n-Butanol von 1 bis 8 entspricht.

12. Katalytischer Bestandteil, verwendbar zur Polymerisation oder Copolymerisation von Olefinen, der durch Kombination eines Übergangsmetalls und gegebenenfalls eines Elektronendonators mit einem Träger der Ansprüche 1 bis 3 oder nach dem Verfahren der Ansprüche 4 bis 11 erhalten wurde.
